# EUROPÄISCHE PATENTSCHRIFT

(11) **EP 0 605 778 B1**
(45) Veröffentlichungstag und Bekanntmachung des Hinweises auf die Patenterteilung: **21.08.1996**
(21) Anmeldenummer: 93118547.4
(22) Anmeldetag: 18.11.1993
(51) Int. Cl.: F16L 55/07

(54) **Vorrichtung zum Auswechseln eines in einer Rohrleitung angeordneten Aggregates**
Device for exchanging aggregates placed in a pipeline
Dispositif de remplacement d'un aggrégat dans une tuyauterie

(30) Priorität: 07.01.1993 DE 4300213
(43) Veröffentlichungstag der Anmeldung: 13.07.1994
(73) Patentinhaber: Bruchhold, Ingo, Dr., D-10585 Berlin (DE)
(72) Erfinder: Bruchhold, Ingo, Dr., D-10585 Berlin (DE)

(56) Entgegenhaltungen:
- DE-U- 9 013 237

## Beschreibung

Die Erfindung betrifft eine Vorrichtung in einer Rohrleibung zum Auswechseln eines Aggregates, das in der ein Medium führenden Rohrleitung angeordnet ist.

Derartige Aggregate sind z. B. Pumpen, Filter, Verdichter oder Armaturen wie Absperrvorrichtungen, Regler und Ventile. Diese Aggregate sind in Rohrleitungen notwendige, aber auch empfindliche Komponenten, die gewartet und unter Umständen repariert oder ersetzt werden müssen. Zur Durchführung dieser Arbeiten wird die Einbaustelle des betreffenden Aggregats in der Rohrleitung durch Steckscheiben unterbrochen oder durch Verlegen von Bypässen umgangen. Diese Arbeiten sind mit einem hohen Aufwand insbesondere an schwer zugänglichen Stellen, wie unter Wasser, verbunden. So muß jedes Mal die Rohrleitung stillgelegt und abgedichtet, das Fördermedium abgelassen oder abgepumpt, der Bypass verlegt und das Aggregat ausgebaut und durch ein neues ersetzt werden. Während der Reparatur, des Austausches und der Bypassmontage kann in bestimmten Fällen keine Förderung durch die Rohrleitung erfolgen. Das Fördermedium kann bei den Umrüstarbeiten aus der Rohrleitung in die Umgebung oder Umgebungsmedium kann in die Rohrleitung gelangen.

Der Erfindung liegt Aufgabe zugrunde, eine Vorrichtung zu schaffen, mit deren Hilfe ein in einer Rohrleitung angeordnetes Aggregat in einfacher Weise ausgewechselt werden kann.

Diese Aufgabe wird erfindungsgemäß durch die Merkmale des Patentanspruches 1 gelöst. Vorteilhafte Ausgestaltungen der Erfindung sind Gegenstand der Unteransprüche.

Durch das Einsetzen des Aggregates in den innerhalb des Führungsrohres angeordneten Träger läßt sich das Aggregat einfach und auch bei anstehendem Betriebsdruck zum Zwecke der Reparatur, des Ersetzens, der Substitution und der Wartung auswechseln. Nur während des eigentlichen Austauschvorganges kommt es zu einer kurzfristigen Absperrung der Rohrleitung, wobei nur geringe Mengen an Fördermedium in die Umgebung gelangen können. Unter Anwendung der mit einem Hydraulikanschluß versehenen Kappen gemäß Patentanspruch 4 oder des Rahmens gemäß Patentanspruch 8 kann der Auswechselvorgang automatisiert und auch an schwer zugänglichen Stellen durchgeführt werden.

Mehrere Ausführungsbeispiele der Erfindung sind in der Zeichnung dargestellt und werden im folgenden näher erläutert. Es zeigen:

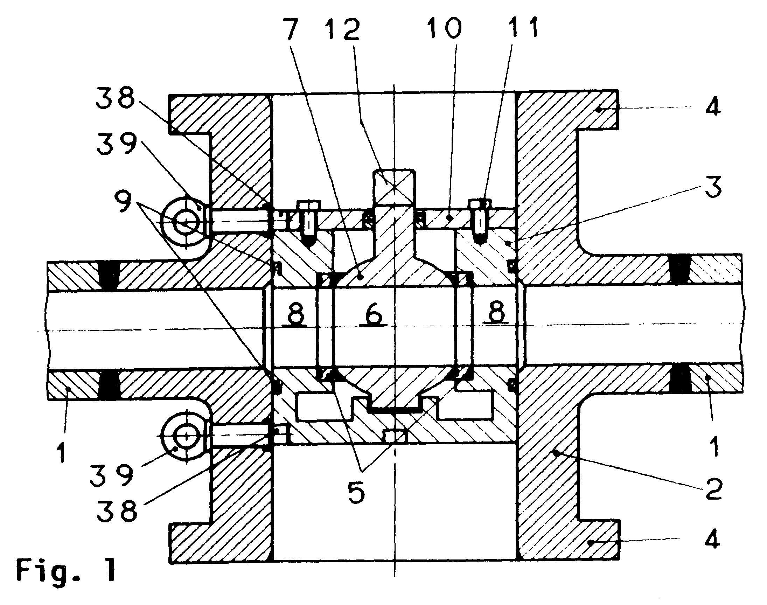

- Fig. 1: den Längsschnitt durch eine ein Aggregat aufnehmende Rohrleitung,
- Fig. 2: die Anordnung gemäß Fig. 1 mit zwei Aggregaten während des Austauschvorganges,
- Fig. 3: den Längsschnitt gemäß Fig. 2 mit angeschlossenen Kappen,
- Fig. 4: die Draufsicht auf Fig. 3,
- Fig. 5: die Anordnung gemäß Fig. 3 in einer anderen Ausführungsform,
- Fig. 6: die perspektivische Darstellung einer Rohrleitung gemäß einer weiteren Ausführungsform,
- Fig. 7: den Längsschnitt durch die Rohrleitung gemäß Fig. 6,

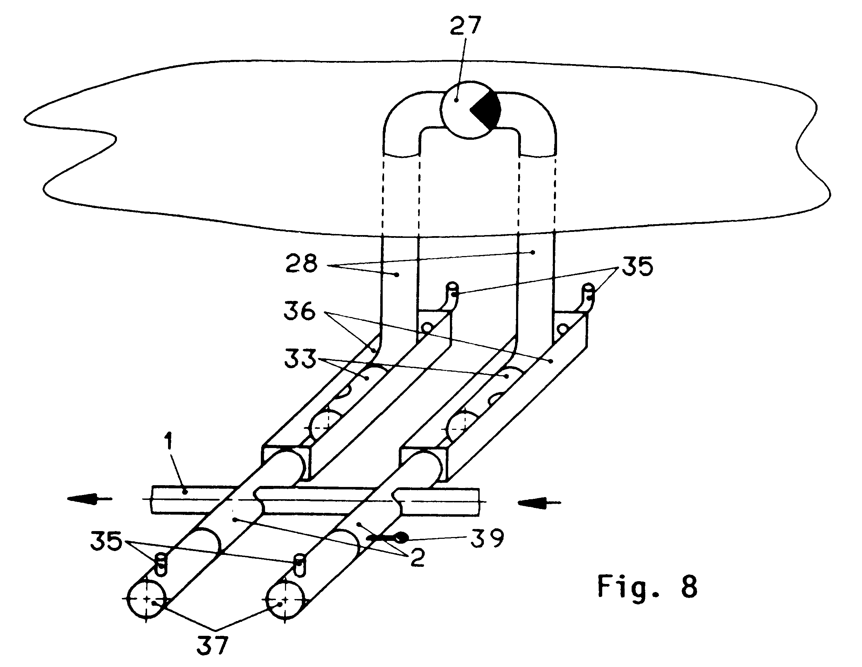

- Fig. 8: die perspektivische Darstellung der Rohrleitung gemäß Fig. 6 mit einer Einrichtung zum Anschluß einer Bypassleitung,
- Fig. 9: die perspektivische Darstellung einer mit der Bypassleitung verbundenen Rohrleitung,
- Fig. 10: den Längsschnitt durch die Rohrleitung gemäß Fig. 9 und
- Fig. 11: eine Vorrichtung zum teilautomatisierten Austausch eines Aggregates.

Eine Rohrleitung 1 dient der Förderung eines Mediums. In der Durchflußrichtung des Mediums ist in der Rohrleitung 1 ein Aggregat angeordnet, das in diesem Falle eine als Kugelhahn ausgebildete Absperrarmatur darstellt. Die Erfindung ist in gleicher Weise auch auf andere Aggregate wie etwa sonstige Armaturen oder Pumpen, Filter und Verdichter anwendbar. In die Rohrleitung 1 ist senkrecht zu der Durchflußrichtung des Mediums ein Führungsrohr 2 eingeschweißt. In das Führungsrohr 2 ist ein zylindrischer Träger 3 eingesetzt, der das Aggregat, in diesem Fall den Kugelhahn aufnimmt. An beiden Enden ist das Führungsrohr 2 mit einem Formschlußflansch 4 versehen.

Der Träger 3 ist vorzugsweise als Kugelhahngehäuse ausgebildet und stellt somit einen Teil des Kugelhahnes selbst dar. In dem Kugelhahngehäuse ist drehbar und über eine Dichtringanordnung 5 abgedichtet ein mit einer Durchgangsbohrung 6 versehenes Kugelküken 7 angeordnet. Zu beiden Seiten des Kugelkükens 7 ist der Träger 3 ebenfalls mit einer Durchgangsbohrung 8 versehen, die den gleichen Querschnitt aufweist wie die Durchgangsbohrung 6 des Kugelkükens 7 und die angeschlossene Rohrleitung 1. Der Träger 3 ist so in dem Führungsrohr 2 ausgerichtet, daß die Achse der Durchgangsbohrungen 8 des Trägers 3 mit der Achse der Rohrleitung 1 fluchtet.

Der Träger 3 ist in dem Führungsrohr 2 über O-Ringe 9 abgedichtet und mit Aussparungen 38 versehen. In diese Aussparungen 38 greifen Bolzen hinein, die das Führungsrohr 2 durchdringen und als steckbare Stifte 39 oder als Schrauben oder Verdrehvorrichtungen ausgebildet sind Die Stifte 39 arretieren den Träger 3 in der Betriebsstellung des Kugelhahnes. Der als Kugelhahngehäuse ausgebildete Träger 3 ist auf der dem geschlossenen Boden gegenüber liegenden Seite durch einen Deckel 10 verschlossen, der mit Hilfe von Schrauben 11 auf dem Träger 3 befestigt ist. Durch den Deckel 10 ist eine mit dem Kugelküken 7 verbundene Ventilspindel 12 abgedichtet hindurchgeführt.

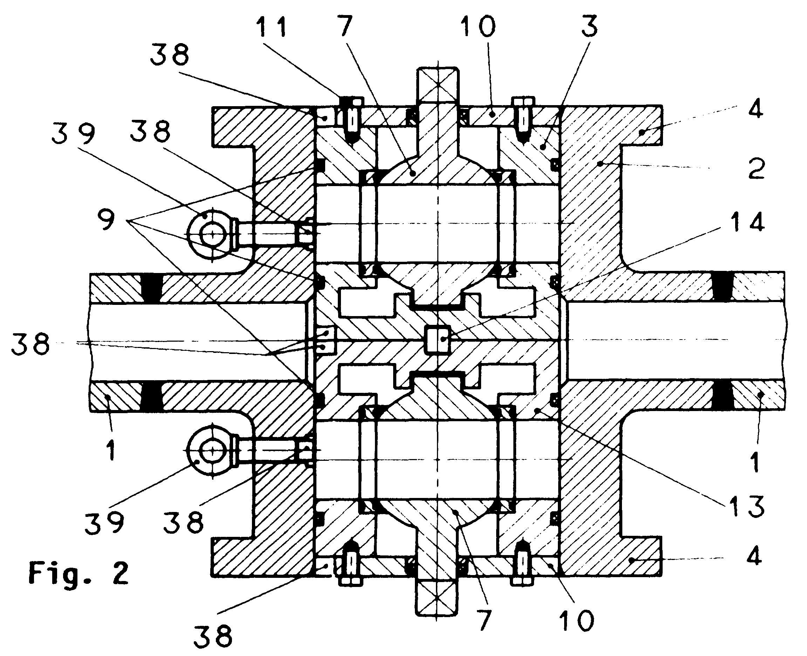

Um das Aggregat z. B. den Kugelhahn auszuwechseln, wird wie in Fig. 2 gezeigt, ein weiterer, gleichartiger, ebenfalls einen Kugelhahn aufnehmender Träger 13 in das Führungsrohr 2 geschoben. Soll dieses ohne die später beschriebenen, mit einem Hydraulikanschluß versehenen Kappen oder den Rahmen geschehen, so muß verhindert werden, daß die Aggregate während des Montagevorganges durch den möglichen Leitungsdruck auseinander geschoben und beidseitig aus dem Führungsrohr 2 gepreßt werden.

Aus diesem Grund muß der weitere Träger 13 mit dem ersten Träger 3, der ausgetauscht werden soll, durch Formschlußelemente 14 verbunden werden, die Gewindestangen sein können. Hierbei wird der weitere Träger 13 gegenüber dem ersten Träger 3 so oft verdreht, bis das Formschlußelement 14 beide Träger 3, 13 ausreichend miteinander verbindet. Erst jetzt können die steckbaren Stifte 39 gelöst werden. Die beiden Träger 3, 13 bilden dann eine Einheit, die mit Hilfe einer Hydraulik so weit in das Führungsrohr 2 in dessen Längsrichtung verschoben, bis sich der weitere Träger 13 in der Betriebsstellung des Kugelhahnes befindet. Dadurch wird der Träger 3 mit dem auszuwechselnden Kugelhahn zur anderen Seite aus dem Führungsrohr 2 herausgeschoben. Die steckbaren Stifte 39 müssen wieder montiert werden, um ein Verdrehen oder Verschieben der Aggregate zu verhindern. Danach wird die Verbindung der Träger 3, 13 wieder gelöst.

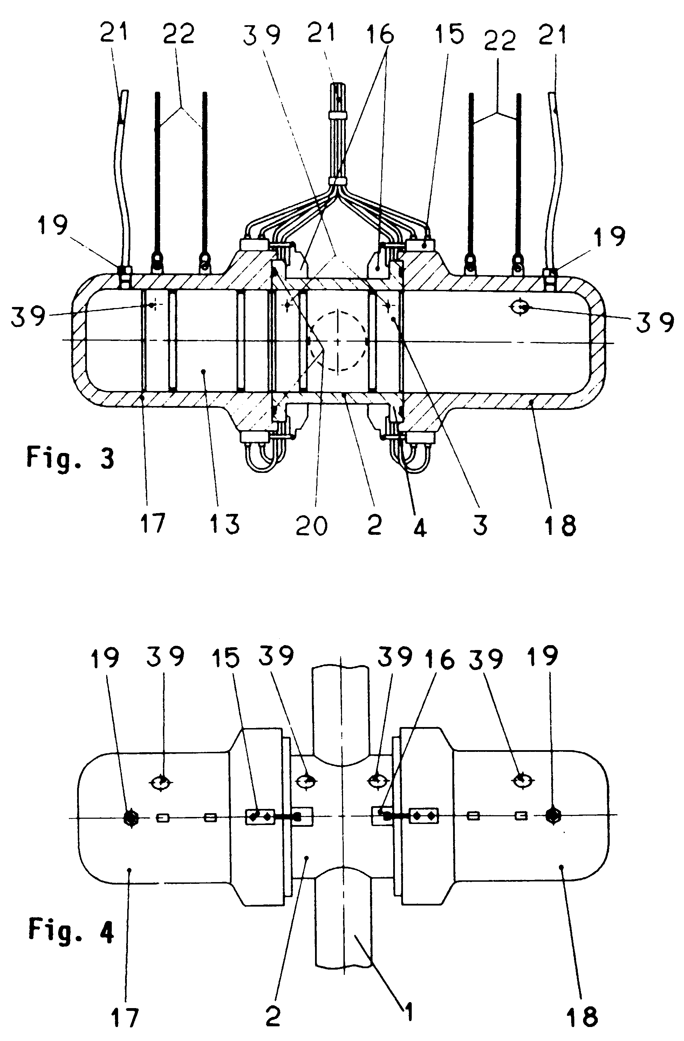

In den Fig. 3 bis 5 ist eine Anordnung gezeigt, mit der das Auswechseln eines von einem Träger 3 aufgenommenen Aggregates automatisch oder teilweise automatisch und an einer schwer zugänglichen Stelle durchgeführt werden kann. Zu diesem Zweck werden über außen angebrachte und über hydraulische Systeme 15 gesteuerte Klammern 16 zwei zylindrische Kappen 17, 18 mit dem Führungsrohr 2 verbunden. Die Kappen 17, 18 sind mit einem Hydraulikanschluß 19 versehen und liegen mit entsprechend geformten Flanschen an den Formschlußflanschen 4 des Führungsrohres 2 an, wobei sie über Dichtungen 20 abgedichtet sind. Auf diese Weise ist ein abgeschlossenes hydraulisches System gebildet. Die Versorgung der Hydraulikanschlüsse 19 und der Hydrauliksysteme 15 mit Druckmedium erfolgt über Zuleitungen 21. Der Querschnitt der Kappen 17, 18 entspricht dem Querschnitt des Führungsrohres 2, während deren Länge die Höhe eines Trägers 3, 13 übersteigt. Zum Auswechseln wird der weitere Träger 13 in eine der Kappen 17 eingesetzt. Dieser Träger 13 liegt über die O-Ringe 8 abgedichtet an der Innenwand der Kappe 17 an und kann in der Kappe 17 in deren Längsrichtung verschoben werden. Über den Hydraulikanschluß 19 wird ein Druckmedium z. B. Wasser in diese Kappe 17 gepumpt, durch dessen Druck der eingesetzte weitere Träger 13 den auszuwechselnden Träger 3 in die freie Kappe 18 schiebt. Der Druck in dieser Kappe 18 wird über den Hydraulikanschluß 19 geregelt. Nach diesem Arbeitsvorgang werden die steckbaren Stifte 39, die hier zum Führungsrohr 2 hin abgedichtet sein müssen, wieder bis zu den Aussparungen 38 eingesetzt, die Kappen 17, 18 werden von dem Führungsrohr 2 entfernt, und der erste Träger 3 wird entnommen.

Die beschriebene Anordnung kann auch zum Auswechseln eines Aggregates verwendet werden, das in einer unter Wasser verlegten Rohrleitung 1 angeordnet ist. Dazu sind die Kappen 17, 18 an Seilen 22 aufgehängt. Über diese Seile 22 werden die Kappen 17, 18 zu dem unter Wasser liegenden Führungsrohr 2 abgesenkt. Ein Taucher justiert unter Wasser die Kappen 17, 18 auf dem Führungsrohr 2, wobei darauf zu achten ist, daß auch hier die steckbaren Stifte 39 gelöst und nach dem Montagevorgang wieder befestigt werden.

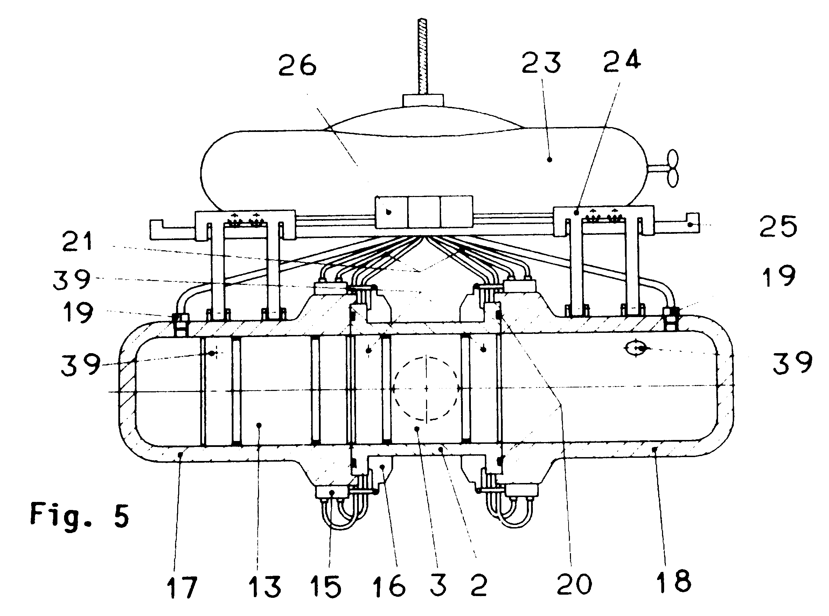

Mit Hilfe der in Fig. 5 dargestellten Anordnung kann das Auswechseln eines Aggregates automatisch vorgenommen werden. Diese Anordnung enthält für eine unter Wasser verlegte Rohrleitung eine tauch- und manövrierfähige Transporteinheit 23, die mit zwei Koppelgestängen 24 ausgerüstet ist. Jedes Koppelgestänge 24 ist mit einer der Kappen 17, 18 verbunden. Die Koppelgestänge 24 sind auf einer an der Transporteinheit 23 angebrachten Schiene 25 horizontal verschiebbar und werden durch einen Hydraulikzylinder 26 angetrieben. Der Hydraulikzylinder 26 für die Koppelgestänge 24 zum Ankoppeln der Kappen 17, 18, die hydraulischen Systeme 15 für das vorübergehende Verbinden der Kappen 17, 18 mit dem Führungsrohr 2 und die Hydraulikanschlüsse 19 für das Verschieben der Träger 3, 13 innerhalb der Kappen 17, 18 werden über eine zentrale Steuereinheit, die auf der Transporteinheit 23 angeordnet sein kann, gesteuert.

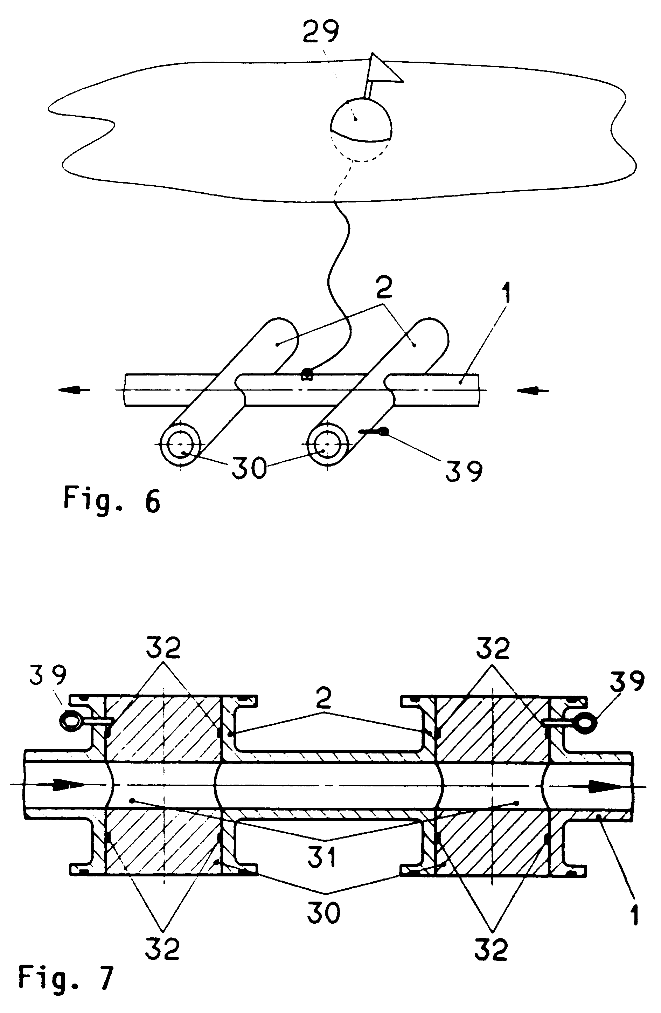

Das beschriebene Prinzip läßt sich auch für den schnellen und automatischen Anschluß einer z. B. mit einer Pumpe 27 versehenen Bypassleitung 28 an eine schwer zugängliche z. B. unter Wasser verlegte Rohrleitung 1 anwenden. Zu diesem Zweck sind in der Rohrleitung 1 zwei Führungsrohre 2 in einem Abstand voneinander angeordnet, der dem Achsabstand der Enden der Bypassleitung 28 entspricht. Die Lage der Verbindungsstelle unter Wasser kann durch eine Boje 29 markiert sein. Der in jedem der beiden Führungsrohre 2 angeordnete Träger ist als Pfropfen 30 ausgebildet. Die Pfropfen 30 sind gemäß Fig. 7 mit einer gradlinig verlaufenden Durchgangsbohrung 31 versehen, die in der Durchflußrichtung des in der Rohrleitung 1 geförderten Mediums verläuft und deren Querschnitt dem Querschnitt der Rohrleitung 1 entspricht. Die Pfropfen 30 sind über O-Ringdichtungen 32 gegenüber dem Führungsrohr 2 abgedichtet.

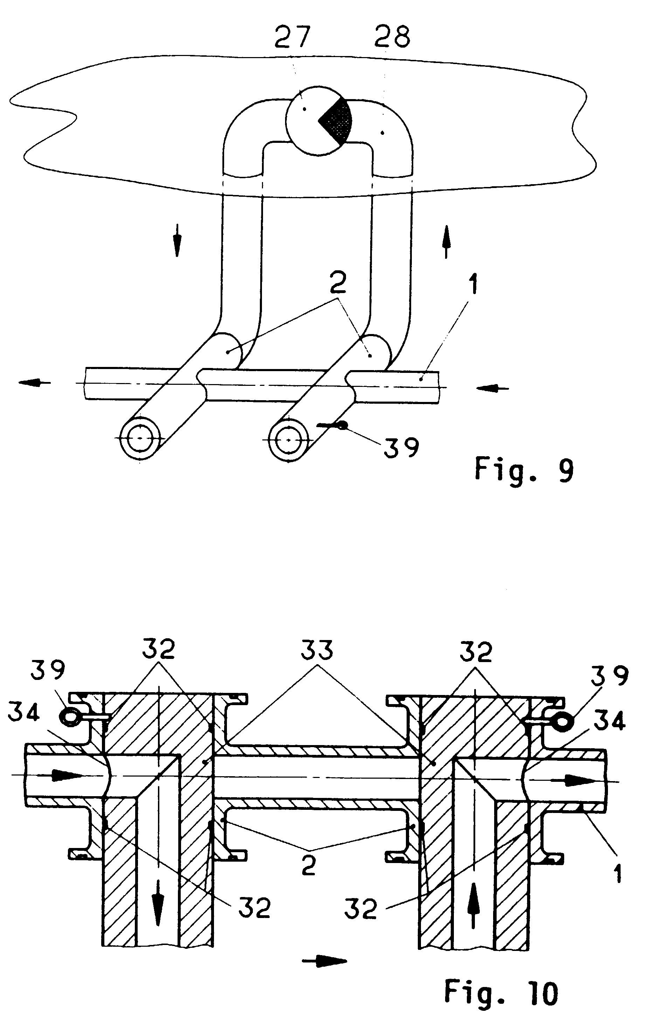

An die Enden der Bypassleitung 28 sind weitere Pfropfen 33 angeschweißt, die den in den Führungsrohren 2 angeordneten Pfropfen 30 mit Ausnahme der Durchgangsbohrung 34 gleichartig sind. Die Durchgangsbohrungen 34 der weiteren Pfropfen 33 sind, wie Fig. 10 gezeigt ist, rechtwinklig abgeknickt und verbinden unter Umgehung des zwischen den Führungsrohren 2 liegenden Rohrabschnittes die Rohrleitung 1 mit der Bypassleitung 28. Die weiteren Pfropfen 33 werden mit Hilfe einer mit einem Druckanschluß 35 versehenen Einpreßeinrichtung 36 in die Führungsrohre 2 gedrückt, bis sie mit der Rohrleitung 1 fluchten. Dabei werden die mit der gradlinig verlaufenden Durchgangsbohrung 31 versehenen Pfropfen 30 in Transportkappen 37 gedrückt, die an dem freien Ende der Führungsrohre 2 befestigt und mit einem Druckanschluß 35 ausgerüstet sind.

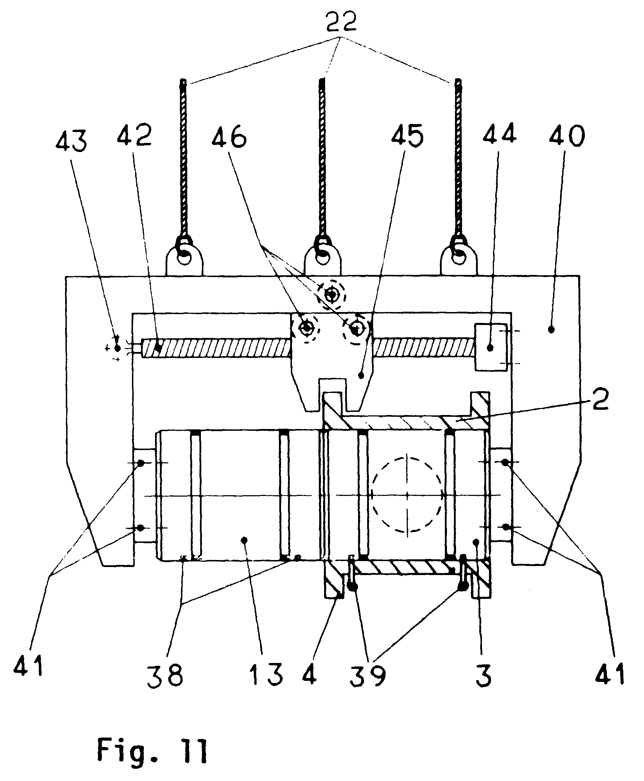

Eine weitere Vorrichtung zum Austausch der Aggregate besteht gemäß Fig. 11 aus einem an den Seilen 22 hängenden Rahmen 40, der gabelförmig ausgebildet ist. Der Rahmen 40 übergreift den auszutauschenden Träger 3 mit dem Führungsrohr 2 und den einzusetzenden Träger 13. Die beiden Träger 3, 13 sind in dem Rahmen 40 mit Hilfe von Befestigungsschrauben 41 fixiert. Oberhalb der Träger 3, 13 ist innerhalb des Rahmens 40 eine Spindel 42 angeordnet, die in einem Drehgelenk 43 drehbar gelagert ist und über einen elektrischen, pneumatischen, hydraulischen oder mechanischen Antrieb 44 angetrieben wird. Die Spindel 42 nimmt eine axial verschiebbare Spindelmutter 45 auf, die über Laufrollen 46 in dem Rahmen 40 geführt ist. Die Spindelmutter 45 ist mit einer Klaue versehen, die den Formschlußflansch 4 des Führungsrohres 2 umgreift. Bei einer Drehung der Spindel 42 schiebt die Spindelmutter 45 bei gelösten Stiften 39 das Führungsrohr 2 über den einzusetzenden Träger 13.

## Patentansprüche

1. Vorrichtung in einer Rohrleitung zum Auswechseln eines Aggregates, das in Durchflußrichtung in der ein Medium führenden Rohrleitung (1) angeordnet ist, dadurch gekennzeichnet, daß das Aggregat in einem zylindrischen Träger (3) eingesetzt ist, der in einem Führungsrohr (2) dicht, auswechselbar und in Richtung der Längsachse des Führungsrohres (2) verlagerbar angeordnet ist und daß das Führungsrohr (2) senkrecht zu der Durchflußrichtung in der Rohrleitung (1) angeordnet ist.

2. Vorrichtung nach Anspruch 1, dadurch gekennzeichnet, daß in das Führungsrohr (2) vorübergehend ein weiterer, gleichartiger Träger (13) eingesetzt ist und daß beide Träger (3, 13) gemeinsam in dem Führungsrohr (2) verschoben werden.

3. Vorrichtung nach den Ansprüchen 1 und 2, dadurch gekennzeichnet, daß beide Enden des Führungsrohres (2) vorübergehend mit jeweils einer einseitig geschlossenen Kappe (17, 18) von gleichem Querschnitt wie das Führungsrohr (2) dicht verbindbar sind und daß die Kappen (17, 18) zur Aufnahme eines Trägers (3, 13) ausgebildet und mit einem Hydraulikanschluß (19) versehen sind.

4. Vorrichtung nach Anspruch 3, dadurch gekennzeichnet, daß die Kappen (17, 18) durch Klammern (16) mit dem Führungsrohr (2) verbindbar sind, die über hydraulische Systeme (15) gesteuert sind.

5. Vorrichtung nach Anspruch 3 oder 4, dadurch gekennzeichnet, daß die hydraulischen Systeme (15) und die Hydraulikanschlüsse (19) über eine gemeinsame Steuereinheit gesteuert sind.

6. Vorrichtung nach einem der Ansprüche 3 bis 5, dadurch gekennzeichnet, daß die Kappen (17, 18) mit einem Koppelgestänge (24) verbunden sind, die auf einer an einer Transporteinheit (23) befestigten Schiene (25) verschiebbar und durch einen Hydraulikzylinder (26) angetrieben sind.

7. Vorrichtung nach den Ansprüchen 1 und 2, dadurch gekennzeichnet, daß in der Rohrleitung (1) in einem Abstand voneinander zwei jeweils einen Träger aufnehmende Führungsrohre (2) angeordnet sind, daß die Träger als Pfropfen (30) mit einer in Durchflußrichtung der Rohrleitung (1) verlaufenden Durchgangsbohrung (31) ausgebildet sind, daß zwei weitere gleichartige, jedoch mit einer abgewinkelten Durchgangsbohrung (34) versehene Pfropfen (33) an den Enden einer Bypassleitung (28) befestigt sind und daß die weiteren Pfropfen (33) mit der Bypassleitung (28) in die Führungsrohre (2) einpreßbar sind.

8. Vorrichtung nach den Ansprüchen 1 und 2, dadurch gekennzeichnet, daß das Führungsrohr (2) und die Träger (3, 13) von einem Rahmen (40) umgreifen sind und daß der Rahmen (40) und das Führungsrohr (2) relativ zueinander verschiebbar sind.

9. Vorrichtung nach einem der Ansprüche 1 bis 8, dadurch gekennzeichnet, daß in dem Träger (3, 13) Aussparungen (38) angeordnet sind, in die das Führungsrohr (2) durchdringende Stifte (39) eingreifen.

10. Vorrichtung nach den Ansprüchen 1 und 2, dadurch gekennzeichnet, daß die Träger (3, 13) über ein Formschlußelement (14) vorübergehend verbunden sind.

## Claims

1. A device provided in a pipeline for replacing an assembly arranged in the flow direction within the fluid-carrying pipeline (1), characterized in that the assembly is inserted in a cylindrical support (3) which is arranged within a guiding tube (2) in a manner sealed, replaceable and displaceable in the direction of the longitudinal axis of the guiding tube (2), and that the guiding tube (2) is arranged within the pipeline (1) in a direction normal to the flow direction.

2. A device according to claim 1, characterized in that another similar support (13) is temporarily inserted in the guiding tube (2), and that both supports (3,13) are jointly displaced within the guiding tube (2).

3. A device according to claims 1 and 2, characterized in that the two ends of the guiding tube (2) temporarily can be sealingly connected to respectively one cap (17,18) closed on one side and being of the same cross-section as the guiding tube (2), and that the caps (17,18) are formed to accommodate a support (3,13) and are provided with a hydraulic connection (19).

4. A device according to claim 3, characterized in that the caps (17,18) can be connected to the guiding tube (2) through brackets (16) controlled through hydraulic systems (15).

5. A device according to claims 3 or 4, characterized in that the hydraulic systems (15) and the hydraulic connections (19) are controlled through a common control unit.

6. A device according to any one of claims 3 to 5, characterized in that the caps (17,18) are connected to coupling rods (24) displaceable on a rail (25) fixed to a transport unit (23) and actuated by a hydraulic cylinder (26).

7. A device according to claims 1 and 2, characterized in that provided in spaced relationship within the pipeline (1) are two guiding tubes (2) respectively accommodating a support, that the supports are formed as plugs (30) provided with a passage bore (31) extending in the flow direction of the pipeline (1), that two additional similar plugs (33) but provided with a bent passage bore (34) are secured to the ends of a by-pass (28), and that the additional plugs (33) can be forced with the by-pass (28) into the guiding tube (2).

8. A device according to claims 1 and 2, characterized in that the guiding tube (2) and the supports (3,13) are embraced by a frame (40), and that the frame (40) and the guiding tube (2) are displaceable relative to one another.

9. A device according to any one of claims 1 to 8, characterized in that recesses (38) are provided in the support (3,13) engaged by pins (39) penetrating the guiding tube (2).

10. A device according to claims 1 and 2, characterized in that the supports (3,13) are temporarily interconnected by a form-locking element (14).

## Revendications

1. Dispositif dans une tuyauterie pour remplacer un groupe disposé dans le sens de débit d'une tuyauterie (1) amenant un milieu, caractérisé par le fait que le groupe est placé dans un support cylindrique (3) qui est disposé dans un tube de guidage (2) de manière étanche, interchangeable et pouvant être déplacé dans le sens de l'axe longitudinal du tube de guidage (2) et par le fait que le tube de guidage (2) est disposé à la verticale par rapport au sens de débit dans la tuyauterie (1).

2. Dispositif selon la revendication 1, caractérisé par le fait que, dans le tube de guidage (2), un autre support (13) de même type est mis en place provisoirement et que les deux supports (3, 13) sont déplacés ensemble dans le tube de guidage (2).

3. Dispositif selon les revendications 1 et 2, caractérisé par le fait que les deux extrémités du tube de guidage (2) peuvent être provisoirement reliées de manière étanche à chaque fois à un capuchon (17, 18) fermé unilatéralement présentant la même section que le tube de guidage (2) et que les capuchons (17, 18) sont formés pour recevoir un support (3, 13) et qu'ils sont pourvus d'un raccordement hydraulique (19).

4. Dispositif selon la revendication 3, caractérisé par le fait que les capuchons (17, 18) peuvent être reliés par des pinces (16) au tube de guidage (2) qui sont asservies par des systèmes hydrauliques (15).

5. Dispositif selon la revendication 3 ou 4, caractérisé par le fait que les systèmes hydrauliques (15) et que les raccordements hydrauliques (19) sont asservis par une unité de commande commune.

6. Dispositif selon l'une des revendications 3 à 5, caractérisé par le fait que les capuchons (16, 18) sont reliés par des tiges de bielle (24) qui peuvent être déplacées sur un rail (25) fixé à une unité de transport et qui sont entraînées par un cylindre hydraulique (26).

7. Dispositif selon les revendications 1 et 2, caractérisé par le fait que dans la tuyauterie (1), deux tubes de guidage (2) recevant chacun un support sont disposés distants l'un de l'autre, que les supports soient réalisés sous forme de tampon (30) avec un trou de traversée (31) dans le sens de débit de la tuyauterie (1), que deux autres tampons (33) de même genre mais toutefois pourvus d'un trou de traversée (34) coudé soient fixés aux extrémités d'une conduite en dérivation (28) et que les autres tampons (33) puissent être comprimés par la conduite en dérivation (28) dans les tubes de guidage (2).

8. Dispositif selon les exigences 1 et 2, caractérisé par le fait que le tube de guidage (2) et que les supports (3, 13) sont entourés d'un cadre (40) et que le cadre (40) et le tube de guidage (2) puissent être déplacés relativement l'un par rapport à l'autre.

9. Dispositif selon l'une des revendications 1 à 8, caractérisé par le fait que des évidements (38) sont disposés dans le support (3, 13) dans lesquels des broches (39) pénétrant dans le tube de guidage (2) s'engrènent.

10. Dispositif selon les revendications 1 et 2, caractérisé par le fait que les supports (3, 13) sont provisoirement reliés via un élément craboté (14).
